# EUROPÄISCHE PATENTSCHRIFT

(11) **EP 1 054 198 B1**
(45) Veröffentlichungstag und Bekanntmachung des Hinweises auf die Patenterteilung: **27.07.2005**
(21) Anmeldenummer: 00109850.8
(22) Anmeldetag: 10.05.2000
(51) Int. Cl.: F16K 31/04, F16K 31/56

(54) **Motor mit Sicherheitsverstellung**
Electric motor with a safety device
Moteur électrique avec un dispositif de sécurité

(30) Priorität: 20.05.1999 DE 29908901 U
(43) Veröffentlichungstag der Anmeldung: 22.11.2000
(73) Patentinhaber: SAIA-Burgess GmbH, 01257 Dresden (DE)
(72) Erfinder: Scholz, Rudolf, Dipl.-Ing., 01257 Dresden (DE)
(74) Vertreter: Heyner, Klaus, Dr.-Ing.

(56) Entgegenhaltungen:
- EP-A- 0 512 139
- FR-A- 1 396 807
- FR-A- 1 519 326
- FR-A- 2 638 218
- US-A- 5 671 903

## Beschreibung

Die Erfindung betrifft eine Vorrichtung zur Lagesicherung der Ventilstellstange eines Ventilantriebs während des Transport- und Montageprozesses der Motor-Ventil-Einheit, wobei der Ventilantrieb von einem Motor mit Sicherheitsverstellung angetrieben wird und mit der Vorrichtung zur Lagesicherung die auf die Ventilstellstange wirkende Sicherheitsverstellung blockiert werden soll.
Ein Motor mit Sicherheitsverstellung ist ein Motor, bei dem bei Spannungsausfall eine Feder die Rückstellung und damit das Schließen des Ventils übernimmt.

Die diese Sicherheitsverstellung ausführende Feder muss das Ventil mit definierter Kraft schließen. Deshalb wird bei einer noch nicht im Ventilgehäuse eingebauten Motor-Ventil-Einheit die Feder infolge ihrer Vorspannung die Ventilstellstange weiter ausfahren als der zulässige Ventilweg beträgt. Eine Motor-Ventil-Einheit in diesem Zustand kann nicht, ohne mechanisch beschädigt zu werden, in ein Ventilgehäuse eingebaut werden.

Eine erste Möglichkeit, den oben beschriebenen Motor zu montieren, besteht darin, den Motor beim Ventilhersteller vor der Montage so zu speisen, dass die Ventilstellstange eingezogen wird und er in diesem Zustand montiert wird. Anschließend kann er normal betrieben werden.

Eine zweite Möglichkeit besteht darin, die Ventilstellstange durch Betreiben des Motors bereits beim Hersteller einzuziehen und mit einem separaten Anschlag (zusätzliches Bauelement als Wegwerfteil) zu fixieren. Vor der Montage ist der Motor zu bestromen, das Zusatzteil ist zu entfernen und der Motor kann im bestromten Zustand montiert werden.

Aus dem Stand der Technik ist ein Ventil mit einem zwischen einer ersten und einer zweiten Schaltstellung hin- und her beweglichen Schließkörper vorbekannt, dass in der DE 196 49 225 A offenbart ist. Dabei sind als piezoelektrische Biegelemente ausgebildete Haltelemente vorgesehen, die den Schließkörper in der zweiten Schaltstellung halten und formschlüssig blockieren. Das Biegeelement ist hierbei zwischen einer Freigabe- und Blockierstellung beweglich ausgebildet und sichert durch Reibschluss die grundsätzliche Betriebsweise des Ventils in seine zweiten Schaltstellung.

Eine mechanische Verriegelung für hin- und hergehende Steuerungsteile, insbesondere für die Steuerspangen von Armaturen, ist der DE 1 140 037 B zu entnehmen. Kennzeichnend für diese Erfindung ist eine hakenförmige Sperreinrichtung, die durch eine Klinke mit Nase gebildet wird, die mit einem Steuerungsteil derart zusammenwirkt, dass bei einer Verstellung des Steuerungsteils in einer Richtung das Steuerungsteil in Eingriff mit der Nase gelangt. Bei einer folgendenden gleichgerichteten Kraftwirkung auf das Steuerungsteil wird das Steuerungsteil wieder außer Eingriff mit der Nase gebracht. Die Klinke weist dazu eine bogenförmige Stirnkante auf, die mit der Nase derart zusammenwirkt, dass bei Gegeneinanderstoßen der Stirnkante mit der Nase eine Kraftkomponente auftritt, die ein Hochschwenken der Klinke gewährleistet.

In der US 5,671,903 ist ein Wärmebehandlungsapparat, insbesondere eine Ventileinrichtung mit einem Auslösemechanismus zur Anwendung in einem Abgassystem eines Niederdruckwärmeofens, offenbart. Die Ventileinrichtung umfasst ein Gehäuse, einen Ventilkörper, eine an den Ventilkörper angeschlossene Stellstange sowie zwei Antriebe. Die Ventilstellstange ist an dem dem Ventilkörper abgewandten Ende mittels eines Auslegers mit dem als Spindel-Mutter-System ausgebildeten ersten Antrieb lösbar gekoppelt, der die Stellstange zum Zwecke des Öffnens des Ventils entgegen einer Federkraft bewegt. Die lösbare Kopplung zwischen der Ventilstellstange und dem Ausleger erfolgt mittels eines an dem Ausleger platzierten und durch den zweiten Antrieb angetriebenen Arretierelements, welches im Betriebszustand in die Stellstange eingreift und diese damit bewegt. Im Notfall springt das Arretierelement aus dem Eingriff mit der Stellstange, wodurch die Stellstange in Wirkrichtung ihrer Federkraft den Strömungspfad des Ventils sehr schnell verschließt.
Vorgenannte Erfindungen haben gemeinsam, dass das Arretierung des Aktuators in einer seiner Schaltstellungen nur mit Hilfsenergie realisiert werden kann.

In der FR 1.396.807 ist ein Getriebe vom Typ Verzahnungsantrieb beschrieben, dass u.a. einen Verriegelungsmechanismus zur Verriegelung einer Längswelle, z. B. eine Antriebswelle, eine Kardanwelle, eine Nockenwelle oder ähnliches, umfasst. Zur Verriegelung ist ein manuell bedienbarer Stift mit einer Nut sowie eine Bremsvorrichtung, die eine Feder mit einer daran befestigten Kugel aufweist, vorgesehen. Der orthogonal zur Längserstreckung der Längswelle ausgerichtete Stift ist an seinem distalen Ende abgeflacht ausgebildet und kann in einer bestimmten Stellung der Längswelle mit dieser derart in Eingriff gebracht werden, indem das distale Ende des Stifts gegen eine flache Ebene auf die Längswelle gedrückt wird. Dabei greift die Kugel des Federelements in die Nut des Stifts ein und arretiert den Stift in seiner Position. Eine derartige Konstruktion erfordert eine nicht unbeachtliche Anzahl von miteinander kooperierenden Bauteilen, was die Störanfälligkeit zusätzlich erhöht.

Aufgabe der Erfindung ist es, eine Verriegelung der Sicherheitsverstellung bei einem Ventilantrieb mit Motor vorzuschlagen, die sehr einfach aufgebaut ist und die für den Transport- und Montageprozess der Motor-Ventil-Einheit eine zuverlässige Lagefixierung der Ventilstellstange ohne Hilfsenergie gewährleistet.

Eine erfindungsgemäße Lösung dieser Aufgabe ist im Patentanspruch 1 angegeben. Weiterbildungen der Erfindung sind in den Unteransprüchen gekennzeichnet.

Nach der Konzeption der Erfindung wird am Ventilkegel der Ventilstellstange ein stabförmiges elastisches Arretier- bzw. Rastelement angebracht, das zur Verriegelung und damit Blockierung der Ventilstellstange in der gewünschten montagegerechten Position an der Stellstangenführung kraftschlüssig angreift oder in eine Ausnehmung der Stellstangenführung formschlüssig eingreift.
Dieses Arretierelement ist mit seinem ersten Ende am Ventilkegel der Ventilstellstange kippbeweglich befestigt und greift im Vernegelungszustand mit seinem zweiten Ende an der Ventilstellstangenführung an und/oder ein.

Zur Herstellung der kraftschlüssigen oder formschlüssigen Verriegelung und damit Lagesicherung der Ventilstellstange wird der Motor solange bestromt bis die Ventilstellstange ausreichend eingezogen ist. Danach wird die mechanische Verbindung zwischen dem elastischen Arretierelement und der Stellstangenführung hergestellt.
Nach der Montage der Motor-Ventil-Einheit im Ventilgehäuse wird die Verriegelung durch eine Einziehbewegung der Ventilstellstange gelöst.
Im entriegelten Zustand erstreckt sich das Arretierelement parallel zur Ventilstellstange.

Bei einer bevorzugten Ausführungsform der Erfindung erfolgt die Verriegelung bzw. Blockierung der Ventilstellstange der Motor-Ventil-Einheit durch eine formschlüssige Verbindung von Arretierelement und Stellstangenführung, wobei das an der Rückseite des Ventilkegels befestigte stabförmige elastische Arretierelement mittels eines entsprechend ausgebildeten Kopfstückes in eine in die Stellstangenführung eingebrachte Ausnehmung eingreift.
Der Formschluss zwischen dem Kopfstück des Arretierelementes und der Ausnehmung in der Stellstangenführung kann haken-, kegel- oder zylinderförmig gestaltet sein.

Während des Transport- und Montageprozesses wird die Blockierung der Ventilstellstange durch die Vorspannung der zur Sicherheitsverstellung ohnehin vorhandenen Rückstellfeder, die das Schließen des Ventils bei Spannungsausfall übernimmt, gesichert.
Dabei ist die Blockierung über die beschriebene Verbindung von flexiblem Arretierelement und Stellstangenführung so ausgebildet, dass sich nach der Montage der Motor-Ventil-Einheit im Ventilgehäuse beim ersten Betätigen des Motors der Form- oder Kraftschluss zwischen Arretierelement und Stellstangenführung selbständig löst.

Weitere Einzelheiten, Merkmale und Vorteile der Erfindung ergeben sich aus der nachfolgenden Beschreibung eines Ausführungsbeispiels unter Bezugnahme auf die zugehörige Zeichnung.

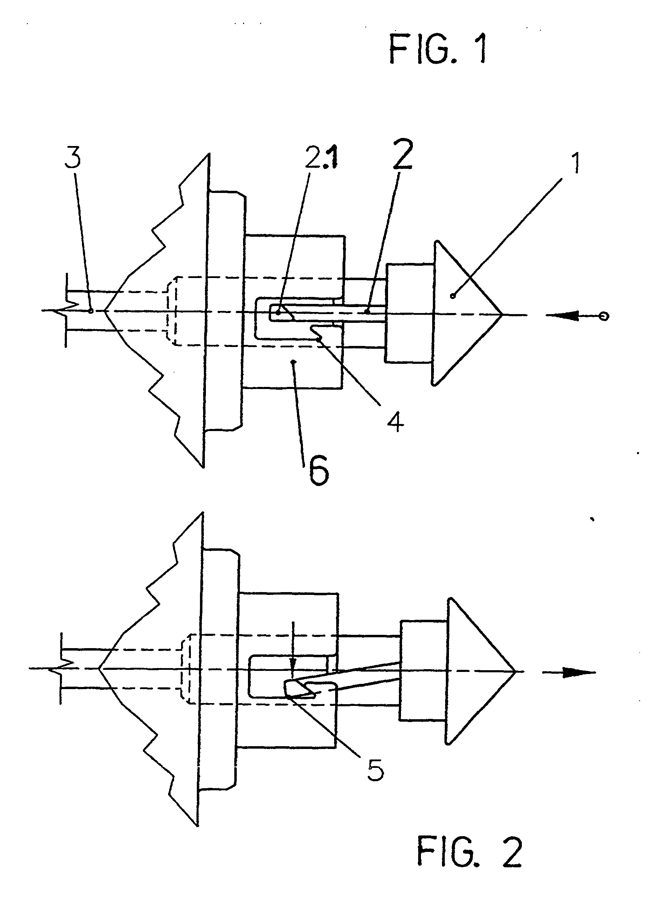

Gezeigt wird in den Fig. 1 und 2 eine Ausführungsform mit formschlüssiger Verbindung zwischen dem flexiblen Arretierelement 2 und der Stellstangenführung 6. Dabei veranschaulicht die Fig. 1 die Blockierung im gelösten Zustand und die Fig. 2 die Elemente der Blockierung im Eingriff.

Bei der dargestellten Ausführungsform einer Vorrichtung zur Lagefixierung der VentilStellstange 3 ist das elastische Arretierelement 2 an der Rückseite des Ventilkegels 1 der Ventilstellstange 3 befestigt. Es wird zusammen mit dem Kunststoffspritzteil -Ventilstellstange- hergestellt. Das Arretierelement 2 hat seine Verbindung zum Ventilkegel 1 nur an seinem Fußpunkt.
Das Kopfstück 2.1 des Arretierelementes 2 und die Ausnehmung 4 in der Stellstangenführung 6 haben eine in ihrer Formgebung angepasste hakenförmige Gestalt.

Zum Einrasten der Blockierung ist der Motor so zu bestromen, dass die Ventilstellstange 3 eingezogen wird. Durch mechanischen Eingriff (z.B. durch die Hand einer Bedienperson) ist das elastische Arretierelement 2 so auszulenken, dass es beim Ausfahren der Ventilstellstange 3 (normale Sicherheitsverstellung mittels der Rückstellfeder) selbständig in die Ausnehmung 4 der Stellstangenführung 6 einrastet.

Durch den Formschluß zwischen Arretierelement 2 und Ausnehmung 4 in der Stellstangenführung 6 blockiert die Ventilstellstange 3 in definierter Lage 5, s. Fig. 2.

Nach der Montage der Motor-Ventil-Einheit im Ventilgehäuse ist als erste motorgetriebene Bewegung das Einziehen der Ventilstellstange 3 auszuführen. Dabei löst sich die Blockierung, das Arretierelement 2 geht in seine Ausgangsstellung zurück und der Motor und das Ventil arbeiten normal weiter.

Bei der Ausbildung des elastischen Arretierelements 2 ist sicherzustellen, daß es beim Lösen weder beschädigt noch abgebrochen wird und daß es ohne äußere Einwirkung nicht selbständig einrasten kann.

### Liste der Bezugszeichen

- 1: Ventilkegel
- 2: Arretierelement
2.1 Kopfstück
- 3: Ventilstellstange
- 4: Ausnehmung in der Stellstangenführung
- 5: Ventilstellstange in definierter Position
- 6: Stellstangenführung

## Patentansprüche

1. Ventilantrieb mit Verriegelungseinrichtung, aufweisend eine Motor-Ventil-Einheit mit Ventilstellstange (3) und einem Haltemittel, das die Ventilstellstange (3) während des Transports- und Montageprozesses in einer zur Montage in einem Ventilgehäuse der Motor-Ventil-Einheit geeigneten Position hält, wobei der Ventilantrieb von einem Motor mit Sicherheitsverstellung angetrieben wird, **dadurch gekennzeichnet, dass** das als stabförmiges flexibles Arretierelement (2) ausgebildete Haltemittel mit seinem ersten Ende am Ventilkegel (1) der Ventilstellstange (3) kippbeweglich befestigt ist und im Verriegelungszustand mit seinem zweiten Ende (2.1) an der Ventilstellstangenführung (6) angreift und/oder eingreift.

2. Ventilantrieb mit Verriegelungseinrichtung nach Anspruch 1, **dadurch gekennzeichnet, dass** die Verriegelung der Ventilstellstange (3) der Motor-Ventil-Einheit mittels kraftschlüssiger Verbindung zwischen dem Arretierelement und der Ventüstellstangenführung (6) erfolgt.

3. Ventilantrieb mit Verriegelungseinrichtung nach Anspruch 1, **dadurch gekennzeichnet, dass** die Verriegelung der Ventilstellstange (3) der Motor-Ventil-Einheit mittels formschlüssiger Verbindung zwischen dem Arretierelement und der Ventilstellstangenführung (6) erfolgt, wobei das an der Rückseite des Ventilkegels (1) kippbeweglich befestigte Arretierelement (2) mittels eines entsprechend ausgebildeten Kopfstücks in eine in die Ventilstellstangenführung (6) eingebrachte Ausnehmung (4) eingreift.

4. Ventilantrieb mit Verriegelungseinrichtung nach Anspruch 3, **dadurch gekennzeichnet, dass** der Formschluss zwischen dem Kopfstück (2.1) des Arretierelements (2) und der Ausnehmung (4) der Ventilstellstangenführung (6) haken-, kegel- oder zylinderförmig ausgebildet ist.

5. Ventilantrieb mit Verriegelungseinrichtung nach einem der Ansprüche 1 bis 4, **dadurch gekennzeichnet, dass** die Verriegelung während des Transport- und Montageprozesses durch die Vorspannung der zur Sicherheitsstellung ohnehin vorhandenen Rückstellfeder, die das Schließen des Ventils bei Spannungsausfall übernimmt, gesichert ist.

6. Ventilantrieb mit Verriegelungseinrichtung nach einem der Ansprüche 1 bis 5, **dadurch gekennzeichnet, dass** die Verriegelungseinrichtung derart ausgebildet ist, dass sich nach der Montage der Motor-Ventil-Einheit im Ventilgehäuse beim erste Betätigen des Motors der Form- oder Kraftschluß zwischen dem Arretierelement (2) und der Ventilstellstangenführung (6) selbsttätig löst.

7. Ventilantrieb mit Verriegelungseinrichtung nach einem der Ansprüche 1 bis 6, **dadurch gekennzeichnet, dass** das Arretierelement (2) sich im Entriegelungszustand parallel zur Ventilstellstange erstreckt.

## Claims

1. Valve drive with locking device provided with a motor/valve unit having a valve actuating rod (3) and a securing device which holds the valve actuating rod (3) during the transport and assembly processes in a position suitable for assembly in a valve housing of the motor/valve unit, whereby the valve drive is actuated by a motor with safety actuation **characterized in that** the securing device designed as rod-shaped resilient locking element (2) is deflectably attached with its first end to the valve cone (I) of the valve actuating rod (3) and in locking condition with its second end (2.1) acts to and/or engages into the valve actuating rod guide (6).

2. Valve drive with locking device to Claim 1 **characterized in that** the valve actuating rod (3) of the motor/valve unit is locked by a force-transmitting connection between the locking element and the valve actuating rod guide (6).

3. Valve drive with locking device to Claim 1 **characterized in that** the valve actuating rod (3) of the motor/valve unit is locked by a formfitting connection between the locking element and the valve actuating rod guide (6), whereby the locking element (2) deflectably attached to the rear side of the valve cone (1) engages into a recess (4) formed in the valve actuating rod guide (6) by means of a suitably designed end piece.

4. Valve drive with locking device to Claim 3 **characterized in that** the formfitting connection between the end piece (2.1) of the locking element (2) and the recess (4) of the valve actuating rod guide (6) is designed in the form of a hook, cone or cylinder.

5. Valve drive with locking device to any of the Claims 1 to 4 **characterized in that** the locking during the transport and assembly processes is secured by the pretension of the reset spring anyway provided for safety to close the valve in case of an electric power outage.

6. Valve drive with locking device to any of the Claims 1 to 5 **characterized in that** the locking device is designed such that after the assembly of the motor/valve unit in the valve housing the formfitting or force-transmitting connection between the locking element (2) and the valve actuating rod guide (6) automatically opens when the motor is actuated for the first time.

7. Valve drive with locking device to any of the Claims 1 to 6 **characterized in that** in the unlocked condition the locking element (2) extends parallel to the valve actuating rod.

## Revendications

1. Actionneur de vanne avec dispositif de verrouillage, présentant une unité moteur-vanne avec tige de commande de vanne (3) et un moyen de retenue qui maintient pendant le processus de transport et de montage la tige de commande de vanne (3) dans une position appropriée pour le montage dans un corps de vanne de l'unité moteur-vanne, l'actionneur de vanne étant entraîné par un moteur avec dispositif de réglage de sécurité, **caractérisé par le fait que** le moyen de retenue réalisé sous la forme d'un élément d'arrêt (2) en forme de tige flexible est fixé par sa première extrémité de manière basculante au cône de vanne (1) de la tige de commande de vanne (3) et se met en prise et/ou s'accroche à l'état verrouillé par sa deuxième extrémité (2.1) sur le guide de tige de commande de vanne (6).

2. Actionneur de vanne avec dispositif de verrouillage selon la revendication 1, **caractérisé par le fait que** le verrouillage de la tige de commande de vanne (3) de l'unité moteur-vanne est réalisé par liaison par adhérence entre l'élément d'arrêt et le guide de tige de commande de vanne (6).

3. Actionneur de vanne avec dispositif de verrouillage selon la revendication 1, **caractérisé par le fait que** le verrouillage de la tige de commande de vanne (3) de l'unité moteur-vanne est réalisé par liaison à blocage par forme entre l'élément d'arrêt et le guide de tige de commande de vanne (6), l'élément d'arrêt (2) fixé de manière basculante à l'arrière du cône de vanne (1) se mettant en prise dans une encoche ou un renfoncement (4) réalisé(e) dans le guide de tige de commande de vanne (6) au moyen d'une tête formée de manière correspondante.

4. Actionneur de vanne avec dispositif de verrouillage selon la revendication 3, **caractérisé par le fait que** le blocage par forme entre la tête (2.1) de l'élément d'arrêt et l'encoche (4) du guide de tige de commande de vanne (6) est en forme de crochet, de cône ou de cylindre.

5. Actionneur de vanne avec dispositif de verrouillage selon l'une des revendications 1 à 4, **caractérisé par le fait que** le verrouillage pendant le processus de transport et de montage est assuré par la précontrainte du ressort de rappel de toute façon présent pour la position de sécurité, qui se charge de la fermeture de la vanne en cas de panne de courant.

6. Actionneur de vanne avec dispositif de verrouillage selon l'une des revendications 1 à 5, **caractérisé par le fait que** le dispositif de verrouillage est conçu de telle manière que le blocage par adhérence ou par forme entre l'élément d'arrêt (2) et le guide de tige de commande de vanne (6) se défait automatiquement au premier actionnement du moteur après le montage de l'unité moteur-vanne dans le corps de vanne.

7. Actionneur de vanne avec dispositif de verrouillage selon l'une des revendications 1 à 6, **caractérisé par le fait que** l'élément d'arrêt (2) s'étend parallèlement à la tige de commande de vanne à l'état déverrouillé.
